Europäisches Patentamt

European Patent Office

Office européen des brevets

(11) Publication number: **0 401 892**
**A2**

(12) **EUROPEAN PATENT APPLICATION**

(21) Application number: **90201339.0**

(22) Date of filing: **25.05.90**

(51) Int. Cl.⁵: **C09D 167/06, C09D 175/06,**
**C09D 161/20, C08L 67/06,**
**C08L 75/06, C08L 61/20**

(30) Priority: **09.06.89 EP 89201496**

(43) Date of publication of application:
**12.12.90 Bulletin 90/50**

(84) Designated Contracting States:
**AT BE CH DE DK ES FR GB GR IT LI LU NL SE**

(71) Applicant: **AKZO N.V.**
**Velperweg 76**
**NL-6824 BM Arnhem(NL)**

(72) Inventor: **Gravanis, Georges**
**La Grange aux dîmes, No. 1**
**F-60700 Pontpoint(FR)**
Inventor: **Rabajoie, Loick**
**7 Rue du Dr. Schweitzer**
**F-60180 Nogent sur Oise(FR)**
Inventor: **Vidla, Jean-Claude Joseph Antoine**
**Rue d'en Haut, St. Vaast les Mello**
**F-60660 Cires les Mello(FR)**
Inventor: **Trescol, Jean Jacques**
**1, Allée Paul Verlaine**
**F-60180 Nogent sur Oise(FR)**

(74) Representative: **Schalkwijk, Pieter Cornelis et al**
**Akzo Patents Department P.O. Box 93 00**
**Velperweg 76**
**NL-6800 SB Arnhem(NL)**

(54) **Thermosetting polyester alloys and coating compositions therefrom.**

(57) Thermosetting polyester alloys and coating compositions therefrom are provided which comprise the co-homocrosslinked product of a first polyester polyol based polymer system with a second free-radically crosslinkable polyester polymer system. The thermosetting polyester alloys and coating compositions in accordance with the present invention provide a good comprise between hardness and flexibility while retaining good solvent resistance, and may find particular use in industrial applications such as in the automotive on-line, off-line and coil-coating fields.

## Thermosetting Polyester Alloys and Coating Compositions Therefrom

### Background of the Invention

The present invention relates generally to polymer alloys of two or more independently crosslinked polymer systems, particularly which may find use in industrial applications such as in the automotive and coil coatings fields. More particularly, the present invention relates to thermosetting polyester alloys which may find use in such applications.

Polymer alloys of the broad type as mentioned above are sometimes referred to as interpenetrating polymer networks (IPNs). IPNs are generally described as intimate mixtures of independently co-crosslinked polymer systems with no ("full" IPNs) or little ("pseudo" IPNs) covalent bonding or grafting between them, held together by permanent entanglements. IPNs are often found to have properties superior to those obtained when the various polymer systems are crosslinked separately.

IPNs can be formed by the co-homocrosslinking of the various polymer systems, which is normally accomplished by either a sequential or simultaneous technique. In the sequential technique, a first crosslinked polymer system is swelled with a monomer and crosslinking agent of a second system, which is then cured "in situ" within the first polymer system. In the simultaneous technique, the monomers and crosslinking agents of the various systems are blended together then simultaneously homocrosslinked.

IPNs and methods of their production are generally known in the art as exemplified by the disclosures of US4302553 and US4468485. The use of IPNs in coating compositions is also generally known, as exemplified by the disclosures of US4569964, US4594397 and EP-A-0117512. All of these references are hereby incorporated by reference herein for all purposes.

### Summary of the Invention

The present invention relates to a particular thermosetting polyester alloy comprising the co-homocrosslinked product of a first polymer system with a second polymer system, characterized in that:
(1) the first polymer system is a first thermosetting polyester system based upon
  (a) a substantially saturated polyester polyol as a binder, and
  (b) a crosslinking agent for the hydroxyl groups of the polyester polyol: and
(2) the second polymer system is a second thermosetting polyester system based upon (a) a free-radically crosslinkable, substantially active hydrogen free, polyester as a binder.

By co-homocrosslinked is it meant that the first and second polymer systems are crosslinked sequentially and/or simultaneously as generally described above and in the previously incorporated references. It is preferred, however, that the first and second polymer systems are simultaneously homocrosslinked.

It has been found that such thermosetting polyester alloys provide a better compromise between hardness and flexibilty, while retaining a high level of solvent resistance, than the separate components.

The present invention further relates to a method for producing such thermosetting polyester alloys by co-homocrosslinking, at an elevated temperature, the aforementioned first and second thermosetting polyester systems.

The present invention still further relates to coating compositions comprising the aforementioned first and second thermosetting polyester systems, as well as to a method of coating a substrate by applying such first and second thermosetting polyester systems to a substrate and then co-homocrosslinking, preferably simultaneously homocrosslinking, at an elevated temperature.

While the above-incorporated references disclose a large number of systems which can be utilized to produce polymer alloys, and a large number of polymer alloys thereby produced from such systems, none disclose nor even suggest a thermosetting polymer alloy, and particularly a thermosetting polyester alloy, which has the utility as that of the present invention in automotive and coil coating applications.

These and other features and advantages of the present invention will be more readily understood by those skilled in the art from a reading of the following detailed description with reference to the examples presented therewith.

### Detailed Description of the Preferred Embodiments

2

As mentioned above, the thermosetting polyester alloys of the present invention comprise the co-homocrosslinked product of a first polymer system with a second polymer system, characterized in that:

    (1) the first polymer system is a first thermosetting polyester system based upon

        (a) a substantially saturated polyester polyol as a binder, and

        (b) a crosslinking agent for the hydroxyl groups of the polyester polyol; and

    (2) the second polymer system is a second thermosetting polyester system based upon

        (a) a free-radically crosslinkable, substantially active hydrogen free, polyester as a binder.

Preferably, these thermosetting polyester alloys comprise the co-homocrosslinked product of about 10 weight% to about 90 weight%, more preferably from about 20 weight% to about 80 weight%, of the first polymer system, and from about 10 weight% to about 90 weight%, more preferably from about 20 weight% to about 80 weight%, of the second polymer system. Weight% here is based upon the total weight of the first and second polymer systems.

Suitable polyester polyols include a wide variety of hydroxyl groups-containing polyesters utilizable in thermosetting coating applications. These polyesters can be produced, for example, by the polycondensation of di- and polyhydric alcohols with di- and polybasic carboxylic acids, including optionally acid alcohol and lactone components. Such polyester polyols may also include acid groups, ether and/or urethane linkages in their structures.

As generally described above, the polyester polyols must be substantially saturated. By substantially saturated is it meant that such polyester polyols contain substantially no unsaturation, such as ethylenic unsaturation, which can readily participate in the free-radical crosslinking reaction of the second polymer system. Unsaturation such as, for example, aromatic and carbonyl unsaturation, may be present in these polyester polyols, as this type of unsaturation will not readily participate in such free-radical crosslinking reaction.

Such polyester polyols are well-known in the art as exemplified by, e.g., EP-B-0111986, which is incorporated by reference herein for all purposes, and need not be further discussed.

As suitable crosslinking agents for the hydroxyl groups of the polyester polyols may be mentioned a wide variety of isocyanate and aminoplast based compounds. As examples of isocyanate based compounds may be mentioned blocked or non-blocked isocyanurate compounds, or blocked or non-blocked aliphatic, cycloaliphatic or aromatic di-, tri-or polyvalent isocyanates, such as disclosed in previously incorporated EP-B-0111986.

Particularly preferred of the crosslinking agents for the hydroxyl groups of the polyester polyol include, for example, blocked triisocyanates and melamine based compounds.

Suitable free-radically crosslinkable polyesters of the second polymer system include, for example, the polyester polyols mentioned above, with the OH groups being replaced or exchanged with free-radically reactive groups.

As preferred free-radically crosslinkable polyesters may be mentioned the acryloyl and methacryloyl groups-containing polyester compounds disclosed in EP-A-0203296, which is incorporated by reference herein for all purposes. Particularly preferred are the acrylic and methacrylic esters of polyester polyols, as discussed in the aforementioned incorporated reference.

The second polymer system may optionally contain a free-radical initiator for the crosslinking reaction. As examples of such may be mentioned peroxides, hydroperoxides and allyloxy compounds.

Particularly preferred are polyallyloxy groups-containing compounds which function not only as free-radical initiators but also participate as reactive crosslinkers in the crosslinking reaction. Such polyallyoxy groups-containing compounds are disclosed, for example, in US4145248, which is incorporated by reference herein for all purposes.

The polymer alloys in accordance with the present invention are produced by co-homocrosslinking the first and second polymer systems at elevated temperatures. By co-homocrosslinking is it meant that the first and second polymer systems are homocrosslinked sequentially and/or simultaneously as generally described above and in the previously incorporated references. It is preferred, however, that the first and second polymer systems are simultaneously homocrosslinked.

The crosslinking conditions are those normally found in thermosetting applications, and are well-known to those skilled in the art. Of course, the crosslinking conditions will vary depending upon a number of factors including the particular systems chosen and the application (e.g., normal on-line automotive coating versus coil-coating) desired; however, it is well within the ability of one skilled in the art to choose the appropriate crosslinking conditions based upon these and other well-known factors.

For example, for on-line and off-line automotive coating applications suitable crosslinking conditions include temperatures of from about $60^{\circ}$-$180^{\circ}$ C for 20-60 minutes, and for coil coating applications suitable crosslinking conditions include pic metal temperatures of from about $196^{\circ}$-$260^{\circ}$ C for from 20-60 seconds.

For coating applications, it is preferred that the first and second polymer systems crosslink at substantially the same rate, which provides a better intimate mixing the the polymer systems resulting in, for example, higher gloss.

The present invention also relates to coating compositions based upon the first and second polymer systems of the aforedescribed thermosetting polyester alloys.

Such first and second polymer systems, and the coating compositions based thereon, may further contain the usual adjuvants and additives such as, for example, dyes, pigments, pigment dispersing agents, fillers, antioxidants, UV stabilizers, antisag agents, rheology control agents, corrosion inhibitors, plasticizers, gloss improving agents and the like.

It is particularly preferred that the coating compositions of the present invention contain a pigment. As examples of suitable pigments may be mentioned the usual types, i.e., acid, basic or neutral pigments which may be organic or inorganic. The pigments may optionally be pretreated to modify their properties. Particular examples of suitable pigments include titanium dioxide, red iron oxide, lead chromate, carbon black and phthalocyanine pigments. The term pigments also refers to metallic pigments such as aluminum and stainless steel.

Substrates may be coated with these coating compositions by applying the first and second polymer systems to a substrate and then co-homocrosslinking the systems under the conditions as described above for producing the thermosetting polyester alloys of the present invention. Again, it is preferred that the first and second polymer systems are simultaneously homocrosslinked.

The coating compositions may be applied in any suitable manner, such as by roller coating, spraying, electrostatic spraying, brushing, sprinkling, flow coating or dipping.

Suitable substrates may include a wide variety of materials, but generally are of a pretreated or non-pretreated metal or alloy such as iron, galvanized iron, steel, sheet metal and aluminum.

The thermosetting polyester alloys and coating compositions as described above generally find use in industrial applications. Particularly preferred uses are in the automotive on-line, off-line and coil coating fields.

These and other features and advantages of the present invention will be further exemplified by the following specific examples offered by way of illustration and not limitation of the above-described invention.

## EXAMPLES

In these examples, three different thermosetting polyester systems were utilized: (1) an NCO crosslinked system, (2) a melamine crosslinked system and (3) a free-radically initiated crosslinked system. The polyester alloys in accordance with the present invention were produced by various combinations of systems (1) and (3), and systems (2) and (3).

## Preparation of the Polyesters

### (A) Polyester Polyol A

Into a reactor provided with a stirrer, column and thermometer, and maintained under a nitrogen atmosphere, were charged:

19,29 parts by weight of 1,2-propane diol,
15,87 parts by weight of neopentyl glycol,
2,86 parts by weight of trimethylol propane and
0,05 parts by weight of dibutyltin oxide.

The temperature of the reaction mixture was raised to $100°$-$115°$C and 61,93 parts by weight isophthalic acid was added, after which the temperature was again raised to $220°$-$225°$C and maintained in this range until the acid number (expressed in mg KOH per g of dry resin) fell below 20. The column was then exchanged with a water separator and a reflux condenser while 3 parts by weight of a mixed aromatic solvent (commercially available under the trade designation Solvesso 100 from Exxon Chemical) was added to the reaction mixture. The temperature was maintained at $220°$-$225°$C until the acid number fell below 2, at which time the temperature was decreased to $180°$C and the reaction mixture diluted successively with 33,75 parts by weight of Solvesso 100 and 9,19 parts by weight of the monomethyl ether of propylene glycol acetate (commercially available under the trade designation Dowanol PMA from Dow Chemical).

The resulting Polyester Polyol A had a solids content of 65% in the solvent blend and an hydroxyl value of 70,1 (expressed in mg KOH per g of dry resin).

(B) Unsaturated Polyester B

Into a reactor provided with a stirrer, reflux condenser, incorporator and thermometer, and maintained under a nitrogen atmosphere, were charged:

28,51 parts by weight of isophorone diisocyanate,

15,75 parts by weight of Solvesso 100,

3,94 parts by weight of Dowanol PMA and

0,05 parts by weight of a 10% solution of dibutyltin dilaurate in a solvent blend of Solvesso 100/Dowanol PMA (80/20).

The temperature of the reaction mixture was raised to $50°C$, while 35,33 parts by weight of a polycaprolactone diol (commercially available under the trade designation Capa200 from Interox) was added over a period of two hours. The temperature was then maintained at $50°C$ until the NCO percentage was $8,5\% \pm 0,2\%$, after which 0,02 parts by weight of the aforementioned dibutyltin dilaurate solution was added. Over the following hour, 16,38 parts by weight of hydroxyl ethyl acrylate was added, and the temperature was raised to $55°C$ and maintained at this level untill all of the NCO groups had reacted.

The resulting Unsaturated Polyester B had a solids content of 80% in the solvent blend.

Individual Systems

(1) NCO Crosslinked System (S1)

The NCO crosslinked system comprised, as a binder, Polyester Polyol A. The polyisocynate crosslinking agent was a hexamethylene diisocyanate based isocyanurate (commercially available under the trade designation Tolonate HDT from Rhone Poulenc), which was fully blocked with methylethyl ketoxime and diluted to 80% solids with Dowanol PMA.

A coating composition was prepared from:

42,08 parts by weight of Polyester Polyol A,

8,59 parts by weight of the polyisocyanate crosslinker (NCO:OH = 0,80),

0,86 parts by weight of the aforementioned dibutyltin dilaurate solution,

0,86 parts by weight of a 10% solution of a flow agent (commercially available under the trade designation Silicon Resin L7500 from Union Carbide),

25,64 parts by weight of a TiO$_2$ pigment (commercially available under the trade designation CL310 from Kronos),

18,97 parts by weight of Solvesso 100 and

3,04 parts by weight of Dowanol PMA.

The resulting coating composition had a solids content of 60% by weight, and was applied by a hand coater onto 0,6 mm thick aluminum panels in an amount to achieve a dry film thickness of 25μm. The coatings were cured under two different conditions:

(a) baking in an oven at $160°C$ for 35 minutes (to simulate normal automotive curing conditions), and

(b) baking in an oven at $300°C$ for 50 seconds to reach a pic metal temperature of $240°C$ (to simulate normal coil coating curing conditions).

The so applied and cured coatings were tested, 24 hours after curing and storage at $23°C$, as follows:

(A) Solvent Resistance - rub test with methyl ethyl ketone under a pressure of 2 kg/cm$^2$ for 100 double rubs.

(B) Surface Hardness - Persoz pendulum method, expressed in seconds.

(C) Gloss - at $60°$, expressed as %.

(D) Flexibility -

(i) T-bend test without crack, expressed as the number of T according to the ECCA T7 norm.

(ii) Impact reverse test without crack, expressed as N-m (inch-pounds).

(iii) Elongation at Break - using an Instron Tensile Tester at a crosshead speed of 1mm/minute, expressed as %.

(E) Glass Transition Temperature (Tg) - using a Thermomechanical Analyzer at a heating speed of 5° C/minute, expressed as ° C.

The results of the testing for the coating compositions cured under condition (a) are reported in Table I, and the results for the coating compositions cured under condition (b) are reported in Table II. As can be seen in both cases, system (1) produced a relatively hard but brittle coating.

### (2) Melamine Crosslinked System (S2)

The melamine crosslinked system comprised, as a binder, the same polyester polyol as utilized above for the NCO crosslinked system. The aminoplast crosslinking agent was a methoxylated melamine resin (commercially available under the trade designation Cymel 303 from American Cyanamid).

A coating composition was prepared from:

40,91 parts by weight of Polyester Polyol A,

6,65 parts by weight of the aminoplast crosslinker,

1,00 parts by weight of a 10% solution of a blocked p-toluene sulfonic acid (commercially available under the trade designation Cycat 4045 from American Cyanamid) in the Solvesso 100/Dowanol PMA (80/20) solvent blend.

0,82 parts by weight of the aforementioned flow agent solution,

24,94 parts by weight of the aforementioned $TiO_2$ pigment and

25,68 parts by weight of the Solvesso 100/Dowanol PMA (80/20) solvent blend.

The resulting coating composition had a solids content of 60%, and was applied, cured under curing condition (b) and tested as with the NCO crosslinked system. The results for the coating compositions cured under condition (b) are reported in Table III. As can be seen, system (2) produced a relatively hard but brittle coating.

### (3) Free-Radically Crosslinked System (S3)

The free-radically crosslinked system comprised, as a binder, Unsaturated Polyester B. As free-radical initiator/crosslinker was utilized a polyallyoxy groups-containing aliphatic liquid oligomer (commercially available under the trade designation Santolink XI-100 from Monsanto).

A coating composition was prepared from:

39,20 parts by weight of Unsaturated Polyester B,

4,70 parts by weight of the initiator/crosslinker,

0,21 parts by weight of a 6% solution of cobalt octoate in white spirit,

0,79 parts by weight of the aforementioned flow agent solution,

0,12 parts by weight of vinyl trimethoxy silane,

23,53 parts by weight of the aforementioned $TiO_2$ pigment and

31,45 parts by weight of the Solvesso 100/Dowanol PMA (80/20) solvent blend.

The resulting coating composition had a solids content of 60%, and was applied, cured and tested as with the NCO crosslinked system. The results for the coating compositions cured under condition (a) is reported in Table I, and the results for the coating compositions cured under condition (b) are reported in both Tables II and III. As can be seen in both cases, system (3) produced a relatively flexible but soft coating.

### Polyester Alloys - Examples 1-15

Various mixtures of systems (1) and (3), and systems (2) and (3), were applied, cured and tested as above. The results for mixtures of systems (1) and (3), cured under condition (a), are reported in Table I. The results for mixtures of systems (1) and (3), cured under condition (b), are reported in Table II. The results for mixtures of systems (2) and (3), cured under condition (b), are reported in Table III.

TABLE I

| System (1) + System (3) - Curing Condition (a) | | | | | | | | |
|---|---|---|---|---|---|---|---|---|
| EX | Wt% of S3 in Mixture | Rub Test | Surface Hardness | Gloss | T-Bend | Impact Reverse | Elongat. | Tg (°C) |
| S1 | 0 | >100 | 340 | 100 | 4,5T | 1,13(10) | 2 | 88 |
| 1 | 20 | >100 | 305 | 98 | 4T | 2,26(20) | 4 | 63 |
| 2 | 40 | >100 | 285 | 96 | 0,5T | 6,78(60) | 220 | 55 |
| 3 | 50 | >100 | 275 | 95 | 0T | 6,78(60) | 240 | 53 |
| 4 | 60 | >100 | 245 | 86 | 0T | 6,78(60) | 130 | 50 |
| 5 | 80 | >100 | 195 | 69 | 1T | 4,52(40) | 80 | 48 |
| S3 | 100 | >100 | 185 | 10 | 1T | 4,52(40) | 60 | -- |

TABLE II

| System (1) + System (3) - Curing Condition (b) | | | | | | | | |
|---|---|---|---|---|---|---|---|---|
| EX | Wt% of S3 in Mixture | Rub Test | Surface Hardness | Gloss | T-Bend | Impact Reverse | Elongat. | Tg (°C) |
| S1 | 0 | >100 | 320 | 100 | 5T | 1,13(10) | 3 | 86 |
| 6 | 20 | >100 | 305 | 100 | 3,5T | 2,26(20) | 3,5 | 65 |
| 7 | 40 | >100 | 260 | 99 | 0,5T | 6,78(60) | 165 | 52 |
| 8 | 50 | >100 | 235 | 94 | 1T | 6,78(60) | 125 | 44 |
| 9 | 60 | >100 | 205 | 91 | 1T | 6,78(60) | 120 | -- |
| 10 | 80 | >100 | 130 | 77 | 1T | 6,78(60) | 75 | -- |
| S3 | 100 | >100 | 70 | 20 | 1T | 6,78(60) | 65 | -- |

TABLE III

| System (2) + System (3) - Curing Condition (b) | | | | | | | | |
|---|---|---|---|---|---|---|---|---|
| | | | Flexibilty | | | | | |
| EX | Wt% of S3 in Mixture | Rub Test | Surface Hardness | Gloss | T-Bend | Impact Reverse | Elongat. | Tg (°C) |
| S2 | 0 | >100 | 330 | 100 | 5T | 1,13(10) | 3 | 92 |
| 11 | 20 | >100 | 330 | 100 | 2,5T | 2,26(20) | 3,5 | 77 |
| 12 | 40 | >100 | 290 | 98 | 1,5T | 6,78(60) | 55 | 69 |
| 13 | 50 | >100 | 250 | 95 | 1T | 6,78(60) | 145 | 69 |
| 14 | 60 | >100 | 205 | 80 | 1T | 6,78(60) | 75 | 67 |
| 15 | 80 | >100 | 130 | 70 | 1T | 6,78(60) | 85 | -- |
| S3 | 100 | >100 | 70 | 20 | 1T | 6,78(60) | 70 | -- |

As can be seen from the results, the combination of the rather hard and brittle systems (1 and 2) with the more soft and flexible system (3), in accordance with the present invention, produced polymer alloys displaying improved mechanical properties, with an unusual compromise between the surface hardness and flexibility properties. The somewhat linear behavior of certain properties (e.g., surface hardness) combined with the somewhat non-linear behavior of other of the properties (e.g., flexibility, gloss and elongation) demonstrates a synergistic effect not expected from merely blending the various systems. In other words, polymer alloys in accordance with the present invention are unexpectedly advantageous over what would be expected based upon the individual systems utilized.

Further, the polymer alloys show a good combination of surface hardness, flexibility and solvent resistance making them especially well-suited for the automotive and coil-coating applications as discussed earlier.

Many modifications and variations can be made to the embodiments specifically mentioned here without departing substantially from the concept of the present invention. Accordingly, it should be clearly understood that the preferred form of the invention described herein is exemplary only, and is not intended as a limitation on the scope thereof.

**Claims**

1. A polymer alloy comprising the co-homocrosslinked product of a first polymer system with a second polymer system, characterized in that the polymer alloy is a thermosetting polyester alloy wherein:
   (1) the first polymer system is a first thermosetting polyester system based upon
      (a) a substantially saturated polyester polyol as a binder, and
      (b) a crosslinking agent for the hydroxyl groups of the polyester polyol: and
   (2) the second polymer system is a second thermosetting polyester system based upon
      (a) a free-radically crosslinkable, substantially active hydrogen free polyester as a binder.

2. The polymer alloy according to claim 1, characterized in that the crosslinking agent for the hydroxyl groups of the polyester polyol is an isocyanate and/or melamine crosslinking agent.

3. The polymer alloy according to claim 1, characterized in that the second polymer system includes a free-radical initiator.

4. The polymer alloy according to claim 3, characterized in that the free-radical initiator comprises a polyallyloxy groups-containing compound.

5. The polymer alloy according to claim 1, characterized in that the polymer alloy comprises the simultaneous homocrosslinked product of the first and second polymer systems.

6. The polymer alloy according to claim 1, characterized in that the polymer alloy is a thermosetting polyester alloy comprising from about 10 to about 90 weight% of the first polymer system and from about 10 to about 90 weight% of the second polymer system, wherein weight% is based upon the total weight of the first and second polymer systems.

7. A coating composition comprising the first polymer system and the second polymer system as set forth in any one of claims 1-4 and 6.

8. The coating composition according to claim 7, characterized in that it further comprises a pigment.

9. A method of producing a polymer alloy by co-homocrosslinking, at an elevated temperature, the first polymer system and the second polymer system as set forth in any one of claims 1-4 and 6.

10. The method according to claim 9, characterized in that the first and second polymer systems are simultaneously homocrosslinked at an elevated temperature.

11. A method of coating a substrate by applying to the substrate a coating composition comprising the first polymer system and the second polymer system as set forth in any one of claims 1-4 and 6, then co-homocrosslinking the first and second polymer systems at an elevated temperature.

12. The method according to claim 11, characterized in that the first and second polymer systems are simultaneously homocrosslinked at an elevated temperature.

13. The method according to claim 11, characterized in that the coating composition further comprises a pigment.